# EUROPÄISCHE PATENTSCHRIFT

(11) **EP 0 552 709 B1**
(45) Veröffentlichungstag und Bekanntmachung des Hinweises auf die Patenterteilung: **13.12.1995**
(21) Anmeldenummer: 93100706.6
(22) Anmeldetag: 19.01.1993
(51) Int. Cl.: A01D 34/47

(54) **Rasenmäher**
Lawn mower
Tondeuse à gazon

(30) Priorität: 23.01.1992 US 824669
(43) Veröffentlichungstag der Anmeldung: 28.07.1993
(73) Patentinhaber: DEERE & COMPANY, Moline, Illinois 61265 (US)
(72) Erfinder: Smith, Larry Neil, Beaver Dam, Wisconsin 53916 (US); Mayberry, Stephen Dale, Ottumwa, Iowa 52501 (US); Forest, Richard Lee, Colona, Illinois 61241 (US)
(74) Vertreter: Feldmann, Bernhard

(56) Entgegenhaltungen:
- AT-B- 336 327
- AU-D- 6 054 573
- DE-B- 1 242 395
- GB-A- 1 098 727
- US-A- 3 824 772

## Beschreibung

Die Erfindung bezieht sich auf einen Rasenmäher mit einem Rahmen, an dem mindestens eine um eine horizontale Welle umlaufende Messerspindel, eine rückwärtig hinter der Messerspindel angeordnete, im Einsatz auf der Grasnabe ablaufende Rolle und ein Abstreifer angeordnet sind, der eine erste Stellung zum Säubern der rückwärtigen Rolle einnehmen kann.

Derartige Rasenmäher werden in der Regel als Spindelmäher bezeichnet. Sie sind für unterschiedliche Mäheinsätze geeignet und werden bevorzugt dort eingesetzt, wo eine hohe Schnittqualität erforderlich ist. Dies ist bei Sportanlagen und dort insbesondere bei Golfplätzen der Fall. Die sogenannten Greens (eine begrenzte Fläche um die Lochfahne) erfordern einen besonders kurzen teppichartigen Grasschnitt höchster Qualität, damit der Ball exakt rollen kann. Aber auch die Spielbahnen (Fairway) sollten keine Grasklumpen oder andere Schnittrückstände aufweisen, damit der Ball einwandfrei geschlagen werden und besser sowie schneller rollen kann. Bei Spindelmähern mit rückwärtig angebauten Grasfangkörben kann insbesonders feuchtes Gras an den Fangkörben hängen bleiben, das auf die Halterung des Untermessers fällt und von dort in Klumpen auf den Boden. Ein weiteres Problem bilden die sogenannten Grasausläufer, auf dem Boden längs oder quer wachsendes Gras, die die Wachstumsmöglichkeiten des Rasens behindern und zu einer schlechten Grasqualität führen, was insbesondere beim Einlochen hinderlich ist. Außerdem besteht beim Schneiden des Grases mit einem Spindelmäher die Gefahr, daß infolge der front- und rückseitig vorgesehen Rollen, die Grashalme in einer Richtung gewalzt werden und sich nach dem Schnitt nicht sofort wieder aufstellen.

Bei dem Rasenmäher, von dem die Erfindung ausgeht (US-A-4 021 996) ist rückwärtig der hinteren Rolle eine Bürstenwalze zu dem einzigen Zweck angeordnet, die Rolle von an ihr anhaftendem Gras zu befreien, um eine gleichmäßige Schnitthöhe zu gewährleisten und um zu verhindern, daß sich auf der Grasnabe Klumpen bilden. Die rückwärtige Rolle ist gegenüber der Bürstenwalze verstellbar, wenn eine größere Schnitthöhe erwünscht ist. In einem solchen Fall verliert bei diesem bekannten Rasenmäher die Bürstenwalze ihre Funktion.

Die mit der vorliegenden Erfindung zu lösende Aufgabe wird darin gesehen, daß der Abstreifer mehrere Funktionen übernehmen kann, um zumindest einige der vorstehend beschriebenen Probleme lösen zu können. Diese Aufgabe ist gemäß der Erfindung dadurch gelöst worden, daß der Abstreifer über Befestigungsmittel derart an den Rahmen zwischen seiner ersten und einer zweiten Stellung anschließbar ist, daß der Abstreifer in seiner ersten Stellung auf die Grasnabe absenkbar ist und in seiner zweiten auf die Grasnabe abgesenkten Stellung Abstand zu der rückwärtigen Rolle aufweist. Auf diese Weise kann der Abstreifer verschiedene Stellungen einnehmen, und zwar, wie beim gattungsmäßig berücksichtigten Stand der Technik, eine Position, in der er lediglich die rückwärtige Rolle putzt. In einer weiteren Position kann der Abstreifer gleichzeitig die rückwärtige Rolle und die Grasnabe putzen. In einer dritten Position überstreicht der Abstreifer lediglich die Grasnabe und hat mit der rückwärtigen Rolle keinen Kontakt.

Der Abstreifer kann auch in seiner Stellung, in der er keinen Kontakt mit der Grasnabe hat, von der rückwärtigen Rolle fortgeschwenkt werden, wenn nach einem weiteren Vorschlag der Erfindung die Befestigungsmittel mindestens zwei den Abstreifer endseitig aufnehmende und an den Enden der rückwärtigen Rolle schwenkbar angeschlossene Tragarme aufweisen, die höhenverstellbar an dem Rahmen und längs verstellbar an dem Abstreifer oder an der rückwärtigen Rolle angeschlossen sind. Die Längsverstellung kann durch unterschiedliche Anschlußstellen oder durch eine teleskopische Ausbildung leicht erfolgen. Bevorzugt wird jedoch, daß die sich gegenüberliegenden Enden der rückwärtigen Rolle mit einer Spindel oder mit zwei nach außen tretenden und an ihren äußeren Enden mit Gewinde versehenen Spindeln ausgerüstet sind, die frontseitigen Enden der Tragarme mit kreisförmigen Öffnungen versehen sind, in die jeweils ein kreisförmiges Exzenterelement mit einer außermittigen die Spindel oder Spindeln aufnehmenden Bohrung und mit einer gegen die Seiten der Tragarme anliegenden Ringschulter einsetzbar ist, und daß auf die Gewinde der Spindeln je eine gegen das zugehörige Exzenterelement anliegende Mutter aufschraubbar ist. Somit brauchen die Muttern lediglich gelöst und das Exzenterelement entsprechend verdreht zu werden, das hierzu einen mit einem Werkzeug erfaßbaren Drehknopf in Form eines Sechskants aufweist.

Die vertikale Einstellung des Abstreifers kann erfindungsgemäß leicht dadurch erfolgen, daß oberhalb der Tragarme Traglaschen vorgesehen sind, die jeweils vertikal verstellbare Zapfen verschwenkbar aufnehmen, die an ihren unteren Enden an den Traglaschen angelenkt sind.

Der Abstreifer kann verschiedene Formen aufweisen. Er kann als Abstreifblech und feststehend oder umlaufend als eine Paddelwalze ausgebildet sein. Besonders gut eignet sich die Ausbildung als antreibbare Bürstenwalze. Für einen solchen Fall kann erfindungsgemäß die Bürstenwalze wahlweise entgegen der Drehrichtung der rückwärtigen Walze antreibbar ausgebildet sein. Im Einsatz dreht sich die auf dem Boden ablaufende rückwärtige Walze im Uhrzeigerdrehsinn, und die Bürstenwalze wird in der entgegengesetzten Drehrichtung angetrieben und fördert das geschnittene Gras oberschlächtig nach rückwärts, beispielsweise in einen Fangkorb. Der Abstreifer wird dadurch noch als ein Förderorgan eingesetzt. Um diese Förderwirkung auszunutzen, kann ferner rückwärtig der Bürstenwalze ein frontseitig offener Fangkorb vorgesehen sein, der an seinem vorderen unteren Ende mit einer Absperrstange versehen ist, deren frontseitiges Ende bis an die Bürstenwalze reicht, damit kein geschnittenes Gut auf die Grasnabe zurückfallen kann. Da die Bürstenwalze ihren verschiedenen Funktionen entsprechend eine Vielzahl von Stellungen einnehmen kann, sollte erfindungsgemäß die Absperrstange so gestaltet sein, daß sie in den verschiedenen Positionen der Bürstenwalze immer bis an deren Peripherie reicht. Hierzu ist deshalb vorgesehen, daß die Absperrstange mit dem Fangkorb einstellbar verbunden und in in den Seitenteilen des Fangkorbes eingearbeite Schlitzen verstellt und festgesetzt werden kann.

Schließlich sollte der Antrieb der Bürstenwalze auch umkehrbar sein, was sich für den Fall als besonders vorteilhaft erweist, in dem die Bürstenwalze nur auf der Grasnabe abrollt. Der Antrieb kann dabei über einen Riemen von der Messerspindel abgeleitet werden. Beim Normaleinsatz ist dann dieser Riemen gekreuzt und für die Umkehrung der Drehrichtung nicht mehr.

Die vertikale Aufhängung der Bürstenwalze kann ferner allseits beweglich gestaltet sein, wenn jeder Zapfen als Gewindezapfen ausgebildet, von einer an ihrer Ober- und Unterseite kugelig gestalteten Vertikalbohrung in den Traglaschen lose aufgenommen und in seiner jeweiligen Lage durch Muttern sicherbar ist.

In der Zeichnung ist ein nachfolgend näher erläutertes Ausführungsbeispiel der Erfindung dargestellt. Es zeigt:
- Fig. 1: einen auf einer vorderen und einer rückwärtigen Rolle im Einsatz auf dem Boden ablaufenden Spindelmäher mit Fangkorb und einer Bürstenwalze in einer Stellung, in der sie die rückwärtige Rolle säubert, die Grasnabe zusätzlich putzt und das geschnittene Gut oberschlächtig in den Fangkorb fördert,
- Fig. 2: die Bürstenwalze und die rückwärtige Rolle nach Fig. 1 im vergrößerten Ausschnitt,
- Fig. 3: eine ähnliche Darstellung wie in Fig. 2, jedoch die Bürstenwalze in einer Stellung, in der sie lediglich mit der rückwärtigen Rolle Kontakt hat und nicht mehr auf der Grasnabe abläuft,
- Fig. 4: eine ähnliche Stellung wie in Fig. 2, in der die Bürstenwalze auf die Grasnabe abgesenkt ist und keinen Kontakt zu der rückwärtigen Rolle hat,
- Fig. 5: einen Schnitt nach der Linie 5 : 5 in Fig. 2,
- Fig. 6: einen Schnitt nach der Linie 6 : 6 in Fig. 2,
- Fig. 7: eine Abstandsveränderungseinrichtung für die Bürstenwalze in auseinandergezogener Darstellung und
- Fig. 8: das rechte Ende einer einstellbaren Absperrstange für den Fangkorb.

Zunächst ist darauf hinzuweisen, daß in der nachfolgenden Beschreibung an verschiedenen Stellen darauf hingewiesen wird, daß einzelne Bauteile paarweise vorgesehen sind, obwohl in der Zeichnung nur der einzelne Bauteil an einer Seite des Mähers zu erkennen ist. Die nicht dargestellten Bauteile sind jedoch identisch oder ähnlich ausgebildet.

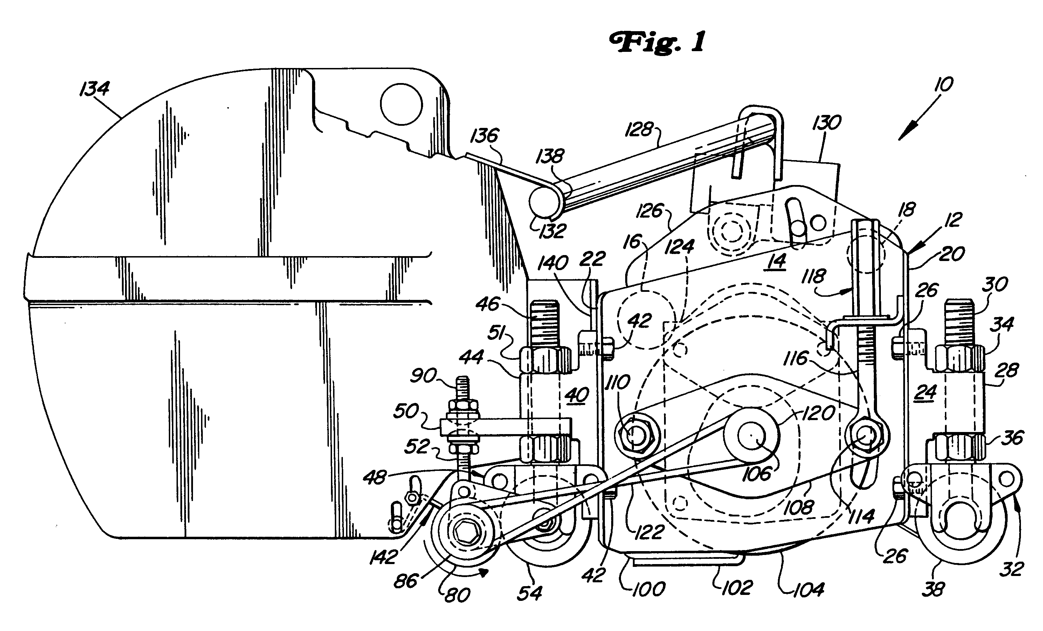

In Fig. 1 der Zeichnung ist ein Mäher mit einer eine Spindel aufweisenden Schneideinrichtung 10 dargestellt. Solche Rasenmäher werden als Spindelmäher bezeichnet und weisen einen Rahmen 12 auf, der aus zwei sich gegenüberliegenden Seitenplatten 14 gebildet ist, die miteinander durch einen oberen rückwärtigen und hohl ausgebildeten Querträger 16 und einen oberen vorderen Querträger 18 verbunden sind. An das vordere und rückwärtige Ende einer jeden Seitenplatte 14 ist ein vorderer und ein rückwärtiger nach außen ausgebogener Flansch 20 und 22 angeformt, die vertikal verlaufende Befestigungsflächen bilden. An die beiden vorderen Flansche 20 ist je eine Traglasche 24 für eine vordere Rolle 38 über vertikalen Abstand zueinander aufweisende obere und untere Schrauben 26 angeschlossen, die sich durch entsprechende Löcher in den vorderen Flanschen 20 nach vorne erstrecken und in Sackbohrungen oder Durchgangsbohrungen in den Traglaschen 24 einschraubbar sind. Jede Traglasche 24 ist mit einem vorderen Vorsprung 28 versehen, und beide Vorsprünge weisen eine vertikale Durchgangsbohrung auf, in denen je ein mit Gewinde versehener Einstellzapfen 30 höhenverstellbar aufgenommen ist, der zu einer vorderen Befestigungslasche 32 für die vordere Rolle gehört. Obere und untere Einstellmuttern 34 und 36 sind auf die Einstellzapfen 30 aufgeschraubt und liegen im Einsatz gegen die Oberseiten und die Unterseiten der Vorsprünge 28 an. Durch die Einstellmuttern können die die vordere Rolle 38 zwischen sich aufnehmenden Befestigungslaschen 32 höhenverstellt werden.

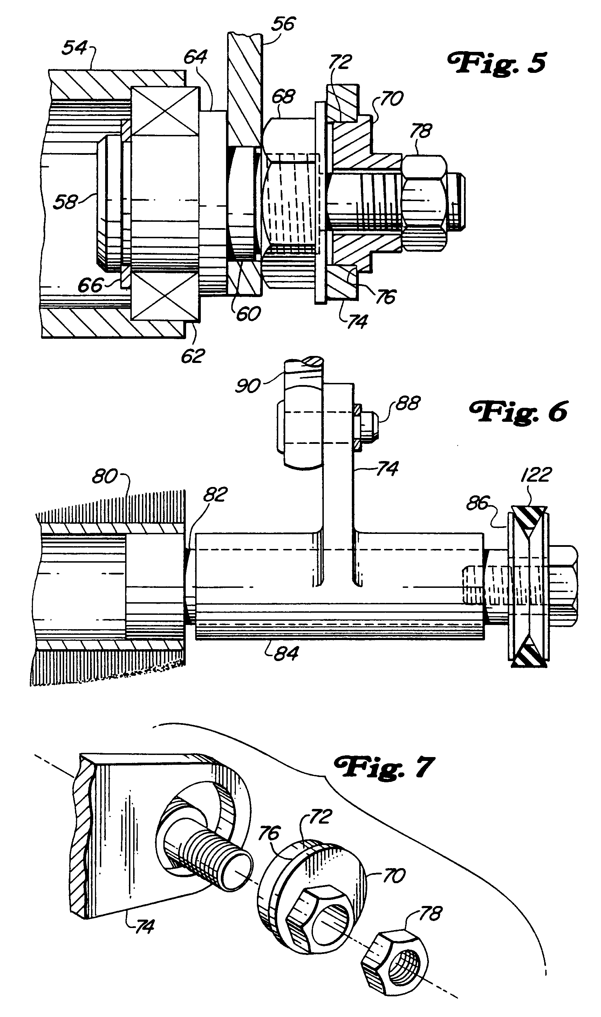

Jeder rückwärtige Flansch 22 ist mit vertikal auseinander liegenden Löchern versehen und nimmt je eine rückwärtige Traglasche 40 für eine rückwärtige Rolle 54 über Schraubenpaare 42 auf, die sich durch die Löcher in den rückwärtigen Flanschen 22 nach rückwärts erstrecken und in Sackbohrungen in den rückwärtigen Traglaschen 40 einschraubbar sind oder sich durch Durchgangslöcher erstrecken. Auch jede rückwärtige Traglasche 40 ist mit einem nach hinten weisenden Vorsprung 44 versehen, die beide eine vertikale Durchgangsbohrung zur Aufnahme je eines mit Gewinde versehenen Einstellzapfens 46 aufweisen. Die Einstellzapfen 46 sind in den Durchgangsbohrungen verstellbar, in ihren jeweiligen Stellungen durch aufschraubbare Muttern 51 und 52 sicherbar und nehmen an ihren unteren Enden je eine Befestigungslasche 48 für die rückwärtige sich parallel zur Schneideinrichtung 10 erstreckende Rolle 54 auf. Im Einsatz liegen die oberen Muttern 51 gegen die Oberseite der Vorsprünge 44 an, während die unteren Muttern 52 gegen die Unterseite von je einer Traglasche 50 anliegen, die dann mit ihren Oberseiten gegen die Unterseiten der Vorsprünge 44 gepreßt werden. Die Traglaschen 50 sind auf die Einstellzapfen 46 aufgesteckt, erstrecken sich im Einsatz freitragend nach rückwärts und dienen zur Aufnahme rückwärtiger Einstellvorrichtungen für einen Abstreifer in Form einer Bürstenrolle. Die rückwärtige Rolle 54 erstreckt sich quer zwischen vertikalen Schenkeln 56 (Fig. 5) der Befestigungslaschen 48 und weist, wie ebenfalls aus Fig. 5 zu erkennen ist, je eine in ihren beiden Enden gelagerte Spindel 58 auf, die je einen außerhalb der Rolle liegenden Abschnitt 60 mit unrundem oder quadratischem Querschnitt aufweisen, die in entsprechend ausgebildeten Ausnehmungen in den Schenkeln 56 aufgenommen sind. Die beiden Spindeln 58 nehmen an ihren in die Rolle hineinragenden Enden je ein Lager 62 auf, deren Außenringe in die zumindest in diesem Bereich hohl ausgebildete Rolle eingepreßt sind und deren Innenringe einerseits gegen eine Schulter 64 an den Spindeln 58 und andererseits gegen einen Schnappring 66 anliegen, der jeweils auf die Spindeln aufsetzbar ist. Die Rolle 54 ist dadurch auf den Spindeln 58 drehbar, wobei noch jeweils eine Bundmutter 68 auf einen mit Gewinde versehenen Abschnitt der Spindeln 58 aufschraubbar ist, die im angezogenen Zustand gegen eine Seite der Schenkel 56 anliegen und diese mit ihrer anderen Seite gegen die den Lagern 62 abgelegenen Seiten der Ringschultern 64 auf den Spindeln 58 drücken. Schließlich sind die Spindeln 58 an ihren äußeren hinter den Bundmuttern 68 liegenden Enden auch noch mit einem Gewindeabschnitt kleineren Durchmessers versehen, auf die jeweils ein exzentrisches Element 70 mit einer äußeren Ringfläche 72 aufgesetzt ist, die damit mit Bezug auf die Längsmittelachsen der Spindeln 58 exzentrisch verlaufen. Ein dreieckförmig ausgebildeter Tragarm 74 für den Abstreifer 80 ist an seinen Spitzen mit je einer Bohrung versehen, wobei der Tragarm nach vorne spitzwinklig verläuft und die in diesen Bereich vorgesehene Bohrung die Ringfläche 72 aufnimmt. Aus Fig. 5 ist zu entnehmen, daß im Einsatz der vorne liegende und die Ringflächen 72 aufnehmende Bereich mit seiner einen Seite gegen die Bundmuttern 68 und mit seiner anderen Seite gegen eine Ringschulter 76 der Elemente 70 anliegt. Über auf die Enden der Gewindeabschnitte der Spindeln 58 aufschraubbare Muttern 78 werden die Ringschultern 76 der Elemente 70 gegen die Tragarme 74 und diese gegen die Bundmuttern 68 gepreßt.

Es wurde vorstehend bereits darauf hingewiesen, daß der Abstreifer 80 in Form einer Bürstenrolle bzw. -walze ausgestaltet ist. Anstelle der Borsten können auch andere Elemente eingesetzt werden, wie z. B. Abstreifgummi oder elastische Abstreifflügel. Eine Ausbildung als Bürste wird aber bevorzugt. Wie aus Fig. 1 der Zeichnung hervorgeht, ist die Bürstenrolle 80 rückwärtig hinter der rückwärtigen Rolle 54 angeordnet und, wie aus Fig. 6 erkennbar ist, an ihren beiden Enden mit je einer nach außen ragenden Spindel 82 versehen, die ihrerseits drehbar in zylindrischen Hülsen 84 aufgenommen sind. Die Spindeln 82 sind mit ihren inneren Enden in das Innenrohr der Bürstenrolle drehfest eingesetzt, und an einer Spindel, beispielsweise an der rechten, ist an deren aus der zugehörigen Hülse nach außen austretendem Ende eine Riemenscheibe 86 drehfest angeordnet. Beim gezeigten Ausführungsbeispiel bilden die Hülsen 84 die unteren rückwärtigen Spitzen der Tragarme 74, in die sie entsprechend integriert sind. Selbstverständlich können die Spindeln 82 des Abstreifers 80 auch direkt in Bohrungen in den unteren rückwärtigen Spitzen der Tragarme 74 drehbar eingesetzt werden.

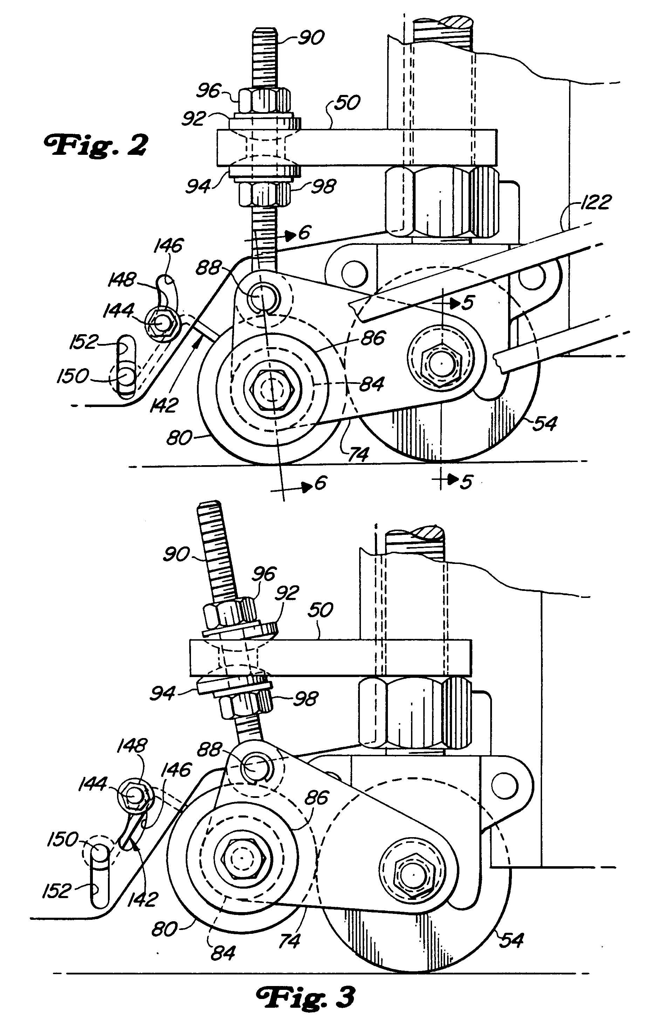

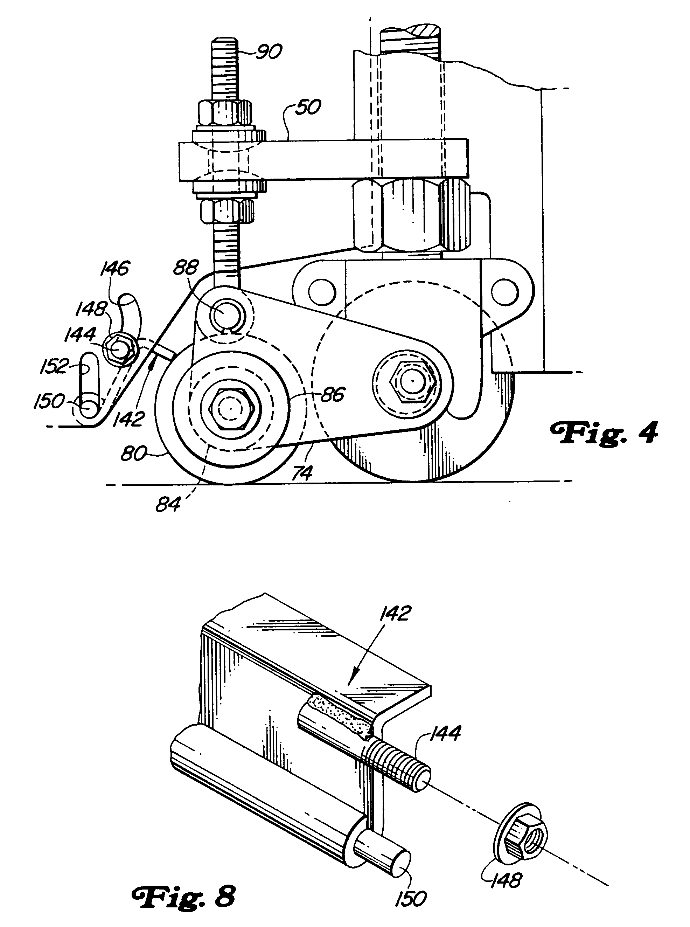

An die obere rückwärtige Spitze eines jeden Tragarmes 74 ist über Stifte 88 jeweils ein Gewindezapfen 90 schwenkbar angeschlossen. Diese dienen ebenfalls zur Einstellung der Bürstenwalze und sind durch Bohrungen in den rückwärtigen Enden der Traglaschen 50 geführt. Diese Bohrungen sind auf der Ober- und Unterseite kugelig zur Aufnahme entsprechend gestalteter Unterlegscheiben 92 und 94 gestaltet (Fig. 2 und 3), die lose auf die Gewindezapfen 90 aufgesteckt sind. Einstellmuttern 96 und 98 sind auf die Gewindezapfen 90 aufschraubbar, von unten und oben gegen die Unterlegscheiben zur Anlage bringbar und dienen zur Festlegung der unteren rückwärtigen Spitzen der Tragarme 74 und damit auch der Bürstenwalze mit Bezug auf die Rasenoberfläche und die rückwärtige Rolle 54.

In Fig. 1 ist noch ein U-förmig ausgebildeter Messerhalter 100 erkennbar, dessen sich gegenüberliegenden Enden mit den Seitenplatten 14 des Rahmens 12 verbunden sind. Der Messerhalter ist noch zur Aufnahme eines Untermessers 102 mit einer quer verlaufenden horizontalen Fläche versehen, an die das Untermesser über nicht dargestellte Pflugschrauben in verschiedenen Stellungen fest anschließbar ist.

Etwa mittig zwischen der vorderen und der rückwärtigen Rolle 38 und 54 ist eine Messerspindel 104 vorgesehen, die eine Welle 106 aufweist, deren sich gegenüberliegenden Enden in rautenförmig ausgestalteten Lagergehäusen 108 gelagert sind. Die Lagergehäuse 108 sind an die Seitenplatten 14 über rückwärtige Schrauben 110 angeschlossen, die eine horizontale Schwenkachse für die Lagergehäuse definieren, und über vordere Schrauben 112, die in kreisbogenförmigen Schlitzen 114, deren Mittelpunkt den rückwärtigen Schrauben 110 entspricht, geführt sind, an mit Gewinde versehenen Haltern 116 angelenkt, die zu einem Einstellmechanismus 118 für die Messerspindel 104 gehören. Das rechtsseitige Ende der Messerspindelwelle 106 erstreckt sich nach außen über das rechte Lagergehäuse 108 hinaus und ist dort mit einer Riemenscheibe 120 für den Antrieb der Bürstenrollenriemenscheibe 86 versehen. Beide Riemenscheiben sind zueinander ausgerichtet in einer Ebene angeordnet, und als Kraftübertragungsglied ist ein Riemen 122 vorgesehen. Die Messerspindel 104 ist mit einer Vielzahl von auf einem Kreisbogen umlaufenden und in der Zeichnung der Einfachheit halber nicht dargestellten Messern versehen, die bei jedem Umlauf ganz dicht über die Spitze des Untermessers 102 streichen, um das Gras präzise schneiden zu können. Nicht besonders zu erwähnen ist in diesem Zusammenhang, daß die Messerspindel, aber auch das Untermesser, in einer Vielzahl von Positionen eingestellt werden kann. Der Antrieb der Messerwelle 104 erfolgt über einen in seiner Drehrichtung umkehrbaren, an der linken Seitenplatte 14 angeflanschten und in der Zeichnung nicht dargestellten Hydraulikmotor vermittels eines in einem Gehäuse 114 angeordneten Getriebes. Im Einsatz wird die Messerspindel 104 im Uhrzeigerdrehsinn angetrieben, wobei die Drehrichtung zum Schleifen umkehrbar ist.

Der Rahmen 12 ist noch mit einem oberen Schild 126 ausgerüstet, der sich zwischen den Seitenplatten 14 erstreckt und an diesen befestigt ist. Ein U-förmig ausgebildeter Ausleger 128 zur Aufnahme eines Fangkorbes 134 ist aus rohrförmigen Material hergestellt, und seine Schenkel erstrecken sich nach rückwärts von dem mittigen Steg, der an einem Tragarm 130 fest angeschlossen ist, der seinerseits an einer zentralen Stelle auf dem Schild 126 aufsitzt. Die rückwärtigen Enden der beiden Schenkel des Auslegers 128 haben nach außen abgebogene zylindrische Endteile 132 zur Aufnahme des Fangkorbes 134. Dieser ist hierzu mit zwei Hängebügeln 136 oder dergleichen versehen, die sich von oberen, vorderen und zueinander Querabstand aufweisenden Stellen an dem Fangkorb nach vorne erstrecken und in nach rückwärts offene halbkreisförmig gebogene Enden 138 auslaufen, die ihrerseits die Zylinderteile 132 des Auslegers 128 umfassen. Der Fangkorb 134 für das Gras ist an seinem vorderen Ende offen und dort durch sich gegenüberliegende Seitenteile begrenzt, welche nach außen gebogene vertikale Flansche 140 aufweisen, die ihrerseits gegen die Flansche 22 der Seitenplatten 14 anliegen. Auf diese Weise ist der Fangkorb so aufgehängt, daß er das geschnittene Gras leicht und sicher auffangen kann. Der Boden der offenen Vorderseite des Fangkorbes wird durch eine winkelförmige Absperrstange 142 gebildet, die einstellbar befestigt werden kann, so daß sie immer nahe der Wurfbahn für das von der Bürstenwalze in ihren verschiedenen möglichen Stellungen geworfene Gras angeordnet werden kann.

Im Einzelnen sind hierzu an die sich gegenüberliegenden Enden der Absperrstange 142 mit Gewinde ausgerüstete Einstellstifte 144 angeschweißt, die sich nach außen durch gebogene Einstellschlitze 146, die in den Seitenteilen des Fangkorbes vorgesehen sind, erstrecken und durch Muttern 148 in ihren jeweiligen Lagen sicherbar sind. Wie am besten aus der Fig. 8 zu ersehen ist, ist das bodenseitige Ende des einen Schenkels der Absperrstange 142 um einen Führungsstift 150 gerollt, dessen sich gegenüberliegende Enden durch nach oben gerichtete und in die beiden Seitenteile des Fangkorbes 134 eingearbeitete Führungsschlitze 152 hindurchtreten. Das Ende des anderen Schenkels der Absperrstange 142 befindet sich in der Regel nahe der Bürstenwalze 80, und es ist offensichtlich, daß, wenn die Bürstenwalze entgegen dem Uhrzeigerdrehsinn oder entgegen der Drehrichtung der rückwärtigen Rolle 54 umläuft, die Absperrstange Grashalme, die an der Bürstenwalze anhaften, abstreift, so daß diese in den Fangkorb gelangen. Eine solche Drehrichtung der Bürstenwalze 80 ist gegeben, wenn der Riemen 122, wie es in der Fig. 1 angedeutet ist, sich zwischen seinen beiden Riemenscheiben kreuzt. Der Riemen wird nicht gekreuzt für den Fall, daß die Bürstenwalze im Uhrzeigerdrehsinn umlaufen soll oder in derselben Drehrichtung wie die Messerspindel 104 und die rückwärtige Rolle 54, um nur eine oder mehrere ihrer möglichen Funktionen zu erfüllen, wie das Abstreifen von geschnittenem an der rückwärtigen Rolle anhaftendem Gras, das Bürsten der Grasnabe nach dem Schnitt, um geknicktes Gras wieder aufzurichten, was beispielweise beim Überfahren durch die vordere und rückwärtige Rolle 38 und 54 passieren kann, und / oder das Auseinanderwerfen von geklumpten Graspartikeln, die auf der Grasnabe liegen können. Im Falle, daß die Grasnabe auch gebürstet werden soll, werden die Muttern 96 und 98 an den Gewindezapfen 90 derart eingestellt, daß sich die Bürstenwalze 80 in ihrer unteren in den Fig. 1, 2 und 4 gezeigten Position befindet. Im Falle, daß man mit der Bürstenwalze nur die Grasnabe bürsten will, wird das exzentrische Element 70 derart verstellt, daß die Bürstenwalze 80 zu der rückwärtigen Rolle 54 einen rückwärtigen Abstand aufweist, wie es in Fig. 4 dargestellt ist. Der Grasfangkorb 134 kann jederzeit leicht entfernt werden, wenn das Sammeln des geschnittenen Grases nicht erwünscht ist, beispielsweise wenn es zu Mulchzwecken auf der Grasnabe verbleiben soll. Andererseits findet die Bürstenwalze ihre beste Verwendung zusammen mit einem Fangkorb, jedoch ist es offensichtlich, daß viele Funktionen, die die Bürstenwalze ausführen kann, das Vorhandensein eines Fangkorbes nicht erfordern. Die Bürstenwalze kann auch dann besonders vorteilhaft eingesetzt werden, wenn die Messerspindel so ausgebildet und angetrieben wird, daß das geschnittene Gras nach vorne in einen frontseitig angebauten Fangkorb gefördert wird.

## Patentansprüche

1. Rasenmäher mit einem Rahmen (12), an dem mindestens eine um eine horizontale Welle (106) umlaufende Messerspindel (104), eine rückwärtig hinter der Messerspindel (104) angeordnete, im Einsatz auf der Grasnabe ablaufende Rolle (54) und ein Abstreifer (80) angeordnet sind, der eine erste Stellung zum Säubern der rückwärtigen Rolle (54) einnehmen kann, dadurch gekennzeichnet, daß der Abstreifer (80) über Befestigungsmittel derart an den Rahmen (12) zwischen seiner ersten und einer zweiten Stellung anschließbar ist, daß der Abstreifer (80) in seiner ersten Stellung auf die Grasnabe absenkbar ist und in seiner zweiten auf die Grasnabe abgesenkten Stellung Abstand zu der rückwärtigen Rolle (54) aufweist.

2. Rasenmäher nach Anspruch 1, dadurch gekennzeichnet, daß die Befestigungsmittel mindestens zwei den Abstreifer (80) endseitig aufnehmende und an den Enden der rückwärtigen Rolle (54) schwenkbar angeschlossene Tragarme (74) aufweisen, die höhenverstellbar an dem Rahmen (12) und längs verstellbar an dem Abstreifer (80) oder an der rückwärtigen Rolle (54) angeschlossen sind.

3. Rasenmäher nach Anspruch 2, dadurch gekennzeichnet, daß die sich gegenüberliegenden Enden der rückwärtigen Rolle (54) mit einer Spindel oder mit zwei nach außen tretenden und an ihren äußeren Enden mit Gewinde versehenen Spindeln (58) ausgerüstet sind, die frontseitigen Enden der Tragarme (74) mit kreisförmigen Öffnungen versehen sind, in die jeweils ein kreisförmiges Exzenterelement (70) mit einer außermittigen die Spindel oder Spindeln (58) aufnehmenden Bohrung und mit einer gegen die Seiten der Tragarme (74) anliegenden Ringschulter (76) einsetzbar ist und daß auf die Gewinde der Spindeln (58) je eine gegen das zugehörige Exzenterelement (70) anliegende Mutter (78) aufschraubbar ist.

4. Rasenmäher nach Anspruch 2, dadurch gekennzeichnet, daß oberhalb der Tragarme (74) Traglaschen (50) vorgesehen sind, die jeweils vertikal verstellbare Zapfen (90) verschwenkbar aufnehmen, die an ihren unteren Enden an den Traglaschen (74) angelenkt sind.

5. Rasenmäher nach einem oder mehreren der vorherigen Ansprüche, wobei der Abstreifer (80) als antreibbare Bürstenwalze ausgebildet ist, dadurch gekennzeichnet, daß die Bürstenwalze (80) wahlweise entgegen der Drehrichtung der rückwärtigen Walze (54) antreibbar ist.

6. Rasenmäher nach einem oder mehreren der vorherigen Ansprüche, dadurch gekennzeichnet, daß rückwärtig der Bürstenwalze (80) ein frontseitig offener Fangkorb (134) vorgesehen ist, der an seinem vorderen unteren Ende mit einer Absperrstange (142) versehen ist, deren frontseitiges Ende bis an die Bürstenwalze (80) reicht.

7. Rasenmäher nach Anspruch 6, dadurch gekennzeichnet, daß die Absperrstange (142) mit dem Fangkorb (134) einstellbar verbunden ist.

8. Rasenmäher nach Anspruch 5, dadurch gekennzeichnet, daß der Antrieb der Bürstenwalze (80) umkehrbar ist.

9. Rasenmäher nach Anspruch 4, dadurch gekennzeichnet, daß jeder Zapfen (90) als Gewindezapfen ausgebildet, von einer an ihrer Ober- und Unterseite kugelig gestalteten Vertikalbohrung in den Traglaschen (50) lose aufgenommen ist und in seiner jeweiligen Lage durch Muttern (96, 98) sicherbar ist.

## Claims

1. Lawn mower with a frame (12) on which at least a cutter spindle (104) rotating about a horizontal shaft (106), a roller (54) arranged rearwardly behind the cutter spindle (104), running on the turf in operation, and a stripper (80), which can assume a first position for cleaning the rearward roller (54), are arranged, characterised in that the stripper (80) can be connected to the frame (12) between its first and a second position through fastening means in such a manner that the stripper (80) in its first position can be lowered on to the turf and in its second position lowered on to the turf has a space to the rear roller (54).

2. Lawn mower according to claim 1, characterised in that the fastening means comprise at least two support arms (74) receiving the stripper (80) at the ends and connected pivotably to the ends of the rear roller (54), which are connected in height adjustable manner to the frame (12) and in longitudinally adjustable manner to the stripper (80) or to the rear roller (54).

3. Lawn mower according to claim 2, characterised in that the ends of the rear roller (54) opposite one another are equipped with a spindle or with two spindles (58) emerging outwardly and provided at their outer ends with a thread, the front ends of the support arms (74) are provided with circular openings into each of which a circular eccentric element (70), with an off-centre bore receiving the spindle or spindles (58) and with an annular shoulder (76) resting against the sides of the support arms (74), can be inserted and that on each of the threads of the spindles (58) a nut (78) resting against the associated eccentric element (70) can be screwed.

4. Lawn mower according to claim 2, characterised in that above the support arms (74), support plates (50) are provided which each pivotably receive vertically adjustable bolts (90) which at their lower ends are pivotally linked to the support plates (74).

5. Lawn mower according to one or several of the preceding claims, wherein the stripper (80) is constructed as a drivable brush cylinder, characterised in that the brush cylinder (80) can be driven selectively counter to the direction of rotation of the rear roller (54).

6. Lawn mower according to one or several of the preceding claims, characterised in that to the rear of the brush cylinder (80), a grass catcher (134) open to the front is provided which is provided at its front lower end with a cut-off bar (142) whose front end extends up to the brush cylinder (80).

7. Lawn mower according to claim 6, characterised in that the cut-off bar (142) is adjustably connected to the grass catcher (134).

8. Lawn mower according to claim 5, characterised in that the drive of the brush cylinder (80) is reversible.

9. Lawn mower according to claim 4, characterised in that each bolt (90) is constructed as a threaded bolt, is received loosely by a vertical bore in the support plates (50) designed spherically at its upper and lower end and can be secured in its respective position by nuts (96, 98).

## Revendications

1. Tondeuse à gazon comportant un cadre (12) sur lequel sont disposés au moins une broche porte-couteaux (104), qui tourne autour d'un arbre horizontal (106), un rouleau (54) qui est disposé, sur le côté arrière, en arrière de la broche porte-couteaux (104) et, en fonctionnement, roule sur le gazon, et un racloir (80), qui peut prendre une première position pour nettoyer le rouleau arrière (54), caractérisée en ce que le racloir (80) peut être raccordé par l'intermédiaire de moyens de fixation au cadre (12) entre ses première et seconde positions de telle sorte que dans sa première position, le racloir (80) peut être abaissé sur le gazon et, dans sa seconde position, dans laquelle il est abaissé sur le gazon, est situé à distance du rouleau arrière (544).

2. Tondeuse à gazon selon la revendication 1, caractérisée en ce que les moyens de fixation comportent au moins deux bras de support (74), qui supportent le racloir (80) à ses extrémités et sont raccordés de manière à pouvoir basculer aux extrémités du rouleau arrière (54) et qui sont raccordés de manière à être réglables en hauteur au cadre (12) et de manière à être réglables longitudinalement au racloir (80) ou au rouleau arrière (54).

3. Tondeuse à gazon selon la revendication 2, caractérisée par le fait que les extrémités opposées du rouleau arrière (54) sont équipées d'une broche ou de deux broches (58) qui sortent extérieurement et comportent un filetage sur leurs extrémités extérieures, les extrémités avant des bras de support (74) sont pourvues d'ouvertures circulaires, dans lesquelles peut être inséré respectivement un élément circulaire d'excentrique (70) comportant un perçage excentré, qui loge la ou les broches (58), et un épaulement annulaire (76) qui s'applique contre les côtés des bras de support (74), et que respectivement un écrou (78), qui s'applique contre l'élément associé d'excentrique (70), peut être vissé sur le filetage des broches (58).

4. Tondeuse à gazon selon la revendication 2, caractérisée en ce qu'au-dessus des bras de support (74) sont prévus des pattes de support (50), qui reçoivent des tétons (90) réglables respectivement verticalement et qui peuvent basculer et sont articulés, au niveau de leurs extrémités inférieures aux pattes de support (74).

5. Tondeuse à gazon selon une ou plusieurs des revendications précédentes, dans laquelle le racloir (80) est agencé sous la forme d'une brosse cylindrique pouvant être entraînée, caractérisée en ce que la brosse cylindrique (80) peut être entraînée en sens opposé du sens de rotation du rouleau arrière (54).

6. Tondeuse à gazon selon une ou plusieurs des revendications précédentes, caractérisée en ce que sur le côté arrière de la brosse cylindrique (80) est prévu un panier de collecte ouvert frontalement (134), qui comporte, sur son extrémité inférieure avant, une barre de blocage (142), dont l'extrémité avant s'étend jusqu'au niveau de la brosse cylindrique (80).

7. Tondeuse à gazon selon la revendication 6, caractérisée en ce que la barre de blocage (142) est reliée d'une manière réglable au panier de collecte (134).

8. Tondeuse à gazon selon la revendication 5, caractérisée en ce que l'entraînement de la brosse cylindrique (80) peut être inversé.

9. Tondeuse à gazon selon la revendication 4, caractérisée en ce que chaque téton (90) est agencé sous la forme d'une tige filetée, qui est logée de façon lâche dans un perçage vertical, qui est agencé avec une forme sphérique au niveau de sa face supérieure et de sa face inférieure et est aménagé dans les pattes de support (50), et peut être bloquée en position à l'aide d'écrous (96,98).
